# EUROPÄISCHE PATENTSCHRIFT

(11) **EP 1 862 210 B1**
(45) Veröffentlichungstag und Bekanntmachung des Hinweises auf die Patenterteilung: **21.07.2010**
(21) Anmeldenummer: 07107617.8
(22) Anmeldetag: 07.05.2007
(51) Int. Cl.: B01D 46/52, B01D 46/00

(54) **Filtergehäuse**
Filter casing
Boîtier de filtre

(30) Priorität: 29.05.2006 DE 102006025232
(43) Veröffentlichungstag der Anmeldung: 05.12.2007
(73) Patentinhaber: MANN+HUMMEL GmbH, 71638 Ludwigsburg (DE)
(72) Erfinder: Blossey, Werner, 71726, Benningen (DE); Rieger, Mario, 71691, Freiberg (DE); Eilert, Lorenz, 38104, Braunschweig (DE)

(56) Entgegenhaltungen:
- US-A- 4 632 681
- US-A- 5 447 544
- US-A- 5 792 247
- US-A1- 2004 134 353

## Beschreibung

### Technisches Gebiet

Die Erfindung betrifft eine Luftfiltereinheit mit einem Filtergehäuse für wenigstens zwei axial durchströmbare Filterelemente, die zwischen ihren Stirnflächen axial durchströmbar sind und am Außenumfang wenigstens einen endlosen Dichtkragen aufweisen, welcher jeweils gegen einen Dichtflansch am Gehäuse anpressbar ist.

### Stand der Technik

Das Dokument US 5 447 544 A zeigt eine Filtervorrichtung mit einer axialen Durchströmung von parallel in einem Gehäuse angeordneten rechteckigen Filterelementen, wobei ein Hebel einen plattenförmigen Spannrahmen, der die Filterelemente an ihrem gesamten Umfang aufnimmt, von einer Einbaulage in eine Endlage bewegt.
In der Schrift US 5 792 247 A ist eine in einen Resonator integrierte Luftfilteranordnung mit zwei parallel angeordneten axial durchströmten zylindrischen Wickelluftfiltern gezeigt.
Die US 4632681 offenbart eine Filtereinrichtung, bei der mehrere Filter mit Hilfe einer Verschlussvorrichtung gegen einen Rahmen gedrückt werden. Mit einem Hebel können die Filterelemente gelöst oder gegen einen Rahmen gespannt werden.
Ein axial durchströmbares Filterelement ist beispielsweise aus der DE 32 49 151 C2 bekannt. Das dort offenbarte Kompaktfilterelement besteht aus einem gewellten und einem glatten Filterpapier. Die Filterpapiere sind miteinander verklebt und dann miteinander zu einem Filterelement der gewünschten Größe aufgewickelt. Dabei erfolgt die Verklebung durch streifenförmigen Auftrag im Kantenbereich derart, dass die Zwischenräume zwischen der gewellten und der glatten Lage abwechselnd an den beiden Stirnseiten verschlossen sind, so dass keine direkte Strömung durch die zwischen den Filterpapieren gebildeten Kanäle möglich ist. Eine Luftströmung gelangt von der Rohluft zur Reinluftseite zunächst nur in einen Stichkanal hinein, dann durch das Filterpapier hindurch und aus einem Stichkanal auf der anderen Seite wieder heraus erfolgen. Gegenüber herkömmlichen Faltenfiltern haben diese Kompaktluftfilter den Vorteil, bei gleicher Baugröße eine größere Filterfläche zu bieten bzw. bei gleicher Filterfläche eine kleinere Baugröße zu ermöglichen. Der aufgewickelte Filterkern ist so ausgebildet, dass eine Luftströmung nur durch das Filterpapier hindurch möglich ist.

Bei solchen und anderen Kompaktluftfilterelementen erfolgt die Strömung axial von einer Stirnseite zur anderen. Für die einwandfreie Funktion ist es wesentlich, dass das Kompaktluftfilterelement an seinem Außenumfang gegenüber dem Filtergehäuse hermetisch abgedichtet ist. Hierzu ist ein Dichtungskragen umlaufend angeformt, der an eine entsprechende Anlageschulter im Filtergehäuse anzulegen und dann daran anzupressen ist.

Muss die Filterfläche vergrößert werden, um z.B. den Strömungswiderstand zu senken, vergrößern sich auch der Wickeldurchmesser des Filterelements und damit die Filtergehäuseabmessungen. Die Vergrößerung des Filtergehäuses ist aber durch den gegebenen Bauraum meist begrenzt. Alternativ können mehrere kleine Filter mit eigenen Filtergehäusen parallel betrieben werden, was aber teuer ist, Bauraum durch mehrfach zu verlegende Zu- und Ableitungen beansprucht und im Wartungsfall dazu führt, dass an mehreren Filtergehäusen die Anschlüsse gelöst, das Gehäuse geöffnet, die Filterelemente getauscht und anschließend die Anschlüsse wieder hergestellt werden müssen, der Filteraustausch also sehr arbeitsintensiv ist.

Aufgabe der Erfindung ist daher die Schaffung einer platzsparenden und einfach zu wartenden Anordnung mehrerer Filterelemente.

### Offenbarung der Erfindung

Diese Aufgabe wird durch eine Luftfiltereinheit mit den Merkmalen des Anspruchs 1 gelöst.

Der Vorteil der Erfindung besteht darin, dass in einem Gehäuse bei nur einer Anschlussleitung mehrere Filterelemente angeordnet werden können. Für die Filterelemente ist eine gemeinsame Abdichtungseinrichtung bereit gestellt, welche Platz spart. Durch das gemeinsame Spannrahmenelement werden alle in das Gehäuse angesetzten Filterelemente über eine gemeinsame Spannvorrichtung angepresst bzw. wieder gelockert; ein einzelnes Element kann nicht vergessen werden. Dadurch ist eine sehr schnelle Montage bzw. Demontage der Filterelemente möglich. Außerdem ergibt sich der Vorteil, dass durch eine zentrale Spannvorrichtung Kantungen an den Dichtkragen vermieden werden, sofern die Spannvorrichtungen zentral zwischen den Filterelementen platziert sind.

Das Gehäuse wird im Wartungsfall geöffnet, der Spannrahmen wird gelockert und kann mit allen eingesteckten Filterelementen gleichzeitig aus dem Gehäuse entnommen werden. Die Filterelemente werden dann aus dem Spannrahmen herausgezogen und gegen neue Elemente ausgetauscht. Spannrahmen und Filterelemente werden dann gemeinsam wieder in das Gehäuse eingelegt und durch die Spannvorrichtung in Richtung des Dichtflansches am Gehäuse bewegt, wo der an den Filterelementen jeweils vorhandenen Dichtkragen angepresst wird.

Das Gehäuse kann so ausgestaltet sein, dass es eine Trennebene besitzt, die nicht mit der Andrückebene des Dichtkragens übereinstimmen muss, sondern insbesondere quer dazu ausgerichtet ist.

Das Gehäuse kann zudem beispielsweise so ausgebildet sein, dass es eine Gehäusewanne umfasst, die sich an zwei gegenüberliegenden Enden jeweils in einem Trichterbereich zu einer Strömungsöffnung hin verjüngt und die in einem zwischen den Trichterbereichen liegenden Zentralbereich zur Endnahme des Filterelements einseitig offen und durch einen Deckel verschließbar ist. Damit kann das Filtergehäuse bei der Wartung eingebaut bleiben und die Luftleitungen an den Anschlussstutzen des Gehäuses müssen nicht gelöst werden, womit eine wesentliche Fehlerquelle bei Wartungsarbeiten beseitigt ist. Es bedeutet gerade bei großen Filtergehäusen, wie sie beispielsweise bei Baumaschinen Einsatz finden, eine wesentliche Arbeitserleichterung, wenn lediglich ein Deckel von der Gehäusewanne des Filtergehäuses abgenommen werden muss und der überwiegende Teil des Gehäuses eingebaut verbleiben kann.

Für die Filterelemente kann jeweils eine gesonderte Kontur als Dichtflansch ausgebildet sein. Ebenso ist es möglich, einen gemeinsamen Dichtflansch zu schaffen, der so viele Ausnehmungen enthält wie Dichtelemente vorhanden sind und um diese Ausnehmungen herum jeweils eine glatte Anlagefläche bietet, gegen die der Dichtkragen an dem jeweiligen Filterelement gepresst werden kann.

Bei einer Ausführungsform mit zwei Filterelementen wird die Spannvorrichtung bevorzugt zwischen beiden Filterelementen angeordnet und schiebt von dieser Position aus den gemeinsamen Spannrahmen der Filterelemente vor.

Um eine möglichst niedrige Bauweise zu erreichen, ist vorgesehen, Filterelemente mit einem ovalen bzw. länglichrunden Querschnitt in ein brillenförmiges Spannrahmenelement einzusetzen. Die Filterelemente sind dabei insbesondere so nebeneinander in dem Gehäuse angeordnet, dass ihre langen Achsen etwa in Flucht liegen. Dieses Prinzip lässt sich auch auf Bauformen mit drei oder vier Filterelementen ausdehnen.

Im einfachsten Fall ist die Spannvorrichtung durch eine Mehrzahl von einzeln betätigbaren Spannverschlusselementen gebildet. Das Spannrahmenelement mit den eingesetzten Filterelementen wird vor dem Dichtflansch des Gehäuses platziert und dann durch die nacheinander folgende Betätigung der Spannverschlusselemente daran herangezogen.

Um die Zugänglichkeit der Spannverschlusselemente zu erhöhen, kann vorgesehen sein, den Spannrahmen im Bodenbereich des Gehäuses an eine Anschlagkante oder einzelne Anschlagelemente anzulegen und dann die Vorspannung über Spannverschlusselemente aufzubringen, die nur im oberen Bereich des Spannrahmens bzw. des Gehäuses angeordnet sind und somit frei zugänglich sind, wenn der Deckel vom Gehäuse ist.

Eine andere Ausführungsform, die nicht Teil der beanspruchten Erfindung ist, sieht einen zentral angeordneten Spannhebel vor, der am Boden der Gehäusewanne an einer benachbart zum Spannrahmen angeordneten Achse schwenkbar gelagert ist, und der an seinem am Spannrahmenelement anliegenden Ende als Schiebekulisse ausgebildet ist, wobei sich der Abstand der Oberfläche der Schiebekulisse zur Achse bei einer Schließbewegung des Spannhebels vergrößert.

Beim Einsetzen der Kombination von Spannrahmen und Filterelementen in das Gehäuse steht der Spannhebel zunächst aufrecht und lässt ein ungehindertes Einsetzen des Spannrahmens zu. Sind Spannrahmen und Filter in der vorgesehenen Position angesetzt, wird der Spannhebel auf den Boden des Gehäuses zu bewegt. Da sich der radiale Abstand der Schiebekulisse von der Schwenkachse immer weiter vergrößert, kontaktiert die Schiebekulisse des Spannhebels das Spannrahmenelement und schiebt es dann mitsamt der eingesetzten Filterelemente auf die Dichtflansche. Über die Geometrie der Schiebekulisse am Spannhebel können die erzielbaren Vorspannkräfte beeinflusst werden.

Um ein Hochschnellen des Spannhebels im Betrieb, beispielsweise bei Vibrationen, zu verhindern, sind an der Unterseite des Deckels vorzugsweise Niederhalterelemente angeformt, die bei aufgesetztem Deckel den Spannhebel berühren oder zumindest so dicht über diesem angeordnet sind, dass ein Hochschnellen und damit ein Lösen der Dichtverbindung verhindert wird.

Eine dritte Ausführungsform, die nicht Teil der beanspruchten Erfindung ist, sieht vor, die Spannvorrichtung durch eine Kniehebeleinheit auszubilden. Ein erster und ein zweiter Kniehebel sind gelenkig miteinander verbunden und senkrecht hintereinander in Bezug auf das Spannrahmenelement im Gehäuse geordnet. Der von dem Spannrahmenelement abgewandte erste Kniehebel ist an einem Festlager am Gehäuseboden gelagert. Der zweite Kniehebel besitzt an seinem am Spannrahmen anzulegenden Ende einen Schiebeführungsbolzen, der in einem Schiebeführungselement als Loslager gelagert ist.

Die Betätigung erfolgt beispielsweise mittels eines Handgriffes, welcher an einem der Kniehebel im Bereich der gelenkigen Kniegelenkverbindung zwischen den Kniehebeln angebracht ist. Durch Druck auf das Betätigungselement werden die zunächst winklig gegeneinander angestellten Kniehebel zunehmend in eine gestreckte Lage gebracht, wobei der zweite Kniehebel mit seinem freien Ende gegen das Spannrahmenelement drückt. Damit der Kraftangriffspunkt des zweiten Kniehebels definiert ist, ist die zusätzliche Schiebeführung am Loslager vorgesehen.

Werden die Kniehebel von der gestreckten Lage aus noch weiter gegen den Gehäuseboden gedrückt, so wird der Totpunkt überwunden und es wird eine Selbsthemmung der Spannvorrichtung bewirkt.

Neben den verschiedenen Ausbildungen der Spannvorrichtung kann auch der Deckel über seine Funktion als reines Ergänzungselement zur Gehäusewanne hinaus mit vorteilhaften Merkmalen versehen werden. Hierzu zählen beispielsweise Stützelemente, die sich an dem jeweiligen freien, nicht eingespannten Ende der Filterelemente anlegen. Insbesondere im Zusammenspiel mit entsprechenden Stützelementen am Gehäuseboden werden die freien Enden der Filterelemente leicht geklemmt, so dass bei entsprechenden Erschütterungen im Betrieb größere Biegemomente auf die Einspannstelle vermieden werden.

Neben punktuell angreifenden Stützelementen, die auch die Funktion eines Endanschlags für die Filterelemente mit übernehmen können, können Verstärkungsrippen an die Unterseite des Deckels angeformt sein, die nicht nur eine Aussteifung des Deckels bewirken und zu einer Materialeinsparung an diesem führen können, sondern die auch eine Abstützung der in das Gehäuse eingesetzten Filterelemente bewirken können.

Ein besonders vorteilhaftes Merkmal am Deckel ist ein Kontrollschwert, das sich zapfenförmig von der Unterseite des Deckels in die Gehäusewanne hinein erstreckt und zwar so, dass es bei korrekt eingesetzten und verspannten Filterelementen an der Rückseite des Spannrahmens anliegt. Im Umkehrschluss bedeutet dies, dass ein Aufsetzen des Deckels bei nicht korrekt positioniertem Spannrahmen nicht möglich ist, da die Kontrollschwerter gegen das Spannrahmenelement stoßen. Der Benutzer erhält somit abschließend beim Aufsetzen des Deckels die Bestätigung, dass er die Filterelemente korrekt eingesetzt und fest verspannt hat. Eine visuelle Kontrolle des Sitzes der Filterelemente, die aufgrund der Einbau und/oder Umgebungsbedingungen vielleicht nur erschwert möglich ist, wird so durch ein einfaches Zusatzelement ersetzt oder ergänzt.

### Kurze Beschreibung der Zeichnungen

Die Erfindung wird mit Bezug auf die nachfolgenden Figuren näher beschrieben. Es zeigen jeweils in perspektivischer Ansicht:
- Fig. 1: eine erste Ausführungsform eines erfindungsgemäßen Filtergehäuses,
- Fig. 2: ein Detail des Filtergehäuses aus Fig. 1,
- Fig. 3: einen Deckel für das Filtergehäuse,
- Fig. 4: eine zweite Ausführungsform eines Filtergehäuses,
- Fig. 5: eine dritte Ausführungsform eines Filtergehäuses, und
- Fig. 6: die Ausführungsform gemäß Fig. 5 mit entfernten Filterelementen.

### Ausführungsform(en) der Erfindung

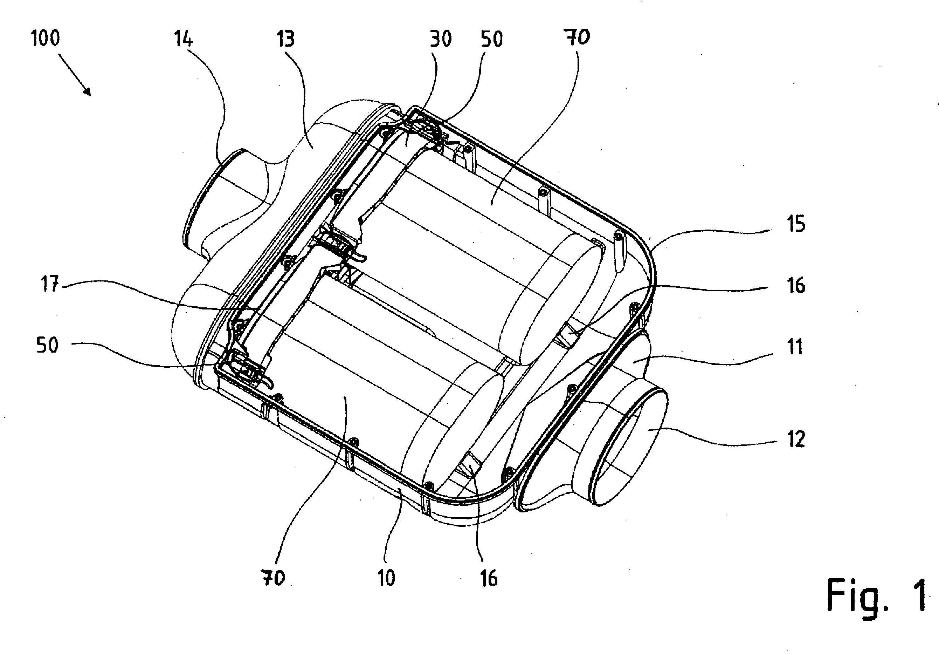

Fig. 1 zeigt ein Filtergehäuse 100, das eine Gehäusewanne 10 umfasst, die entlang eines Flansches 15 zur Aufnahme eines hier nicht dargestellten Deckels vorgesehen ist. Die Gehäusewanne 10 verjüngt sich über einen Trichterbereich 13 zu einem reinluftseitigen Anschlussstutzen 14 und über einen Trichterbereich 11 zu einem rohluftseitigen Anschlussstutzen 12.

Am Gehäuseboden sind Stützelemente 16 erkennbar, auf denen Filterelemente 70 mit ihrem losen, nicht eingespannten Ende aufliegen.

An ihrem anderen Ende sind die Filterelemente in einen Spannrahmen 30 eingesteckt und werden über diesen an Dichtflansche 17 im Gehäuse angepresst. Zum Aufbringen der Vorspannung sind links, rechts und in der Mitte jeweils Spannverschlusselemente 50 vorgesehen.

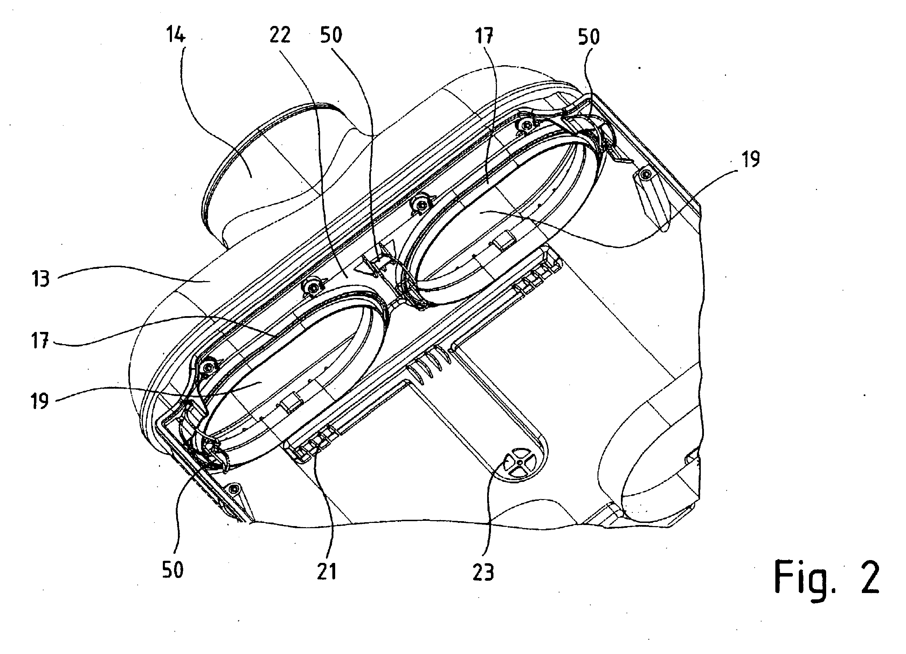

Fig. 2 zeigt den reinluftseitigen Bereich des Filtergehäuses 100 im Detail, wobei hier die Filterelemente und der Spannrahmen zur besseren Darstellung entfernt sind. Am Gehäuseboden ist eine Profilierung erkennbar, die sich entlang einer parallel zu den Dichtflaschen 17 verlaufenden Rinne erstreckt. Durch diese Profilierung ist ein Festlager 21 gebildet, in welches das Spannrahmenelement zunächst mit seiner Unterseite eingehakt werden kann, um dann mittels der oben an dem Dichtflansch 17 angeordneten Spannverschlusselemente 50 angepresst zu werden. Im vorliegenden Ausführungsbeispiel sind an einer gemeinsamen Querschottwand 22 jeweils eine Ausnehmung 19 und ein Dichtflansch 17 für jedes Filterelement ausgebildet. Die rohluftseitig angesaugte Luft durchströmt die in Fig.2 nicht dargestellten Filterelemente und strömt als Reinluft durch die beiden Ausnehmungen 19 in den Trichterbereich 13 durch den Anschussstutzen 14.

Um den Abfluss von eingedrungener Feuchtigkeit oder Kondenswasser zu ermöglichen, ist im vorliegend dargestellten Ausführungsbeispiel ein Bodenablauf 23 vorgesehen.

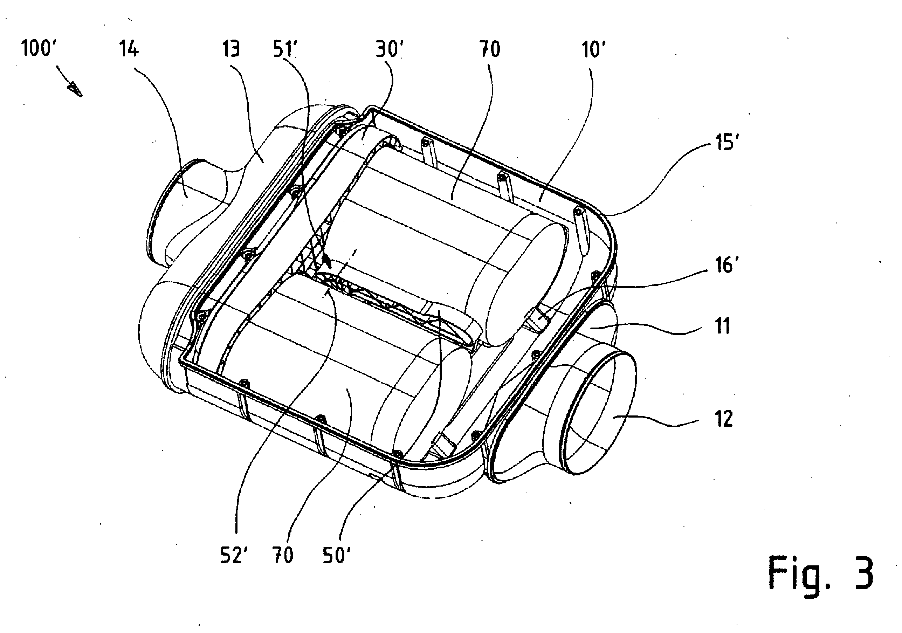

Fig. 3 zeigt eine Ausführungsform eines Filtergehäuses 100', das nicht Teil der beanspruchten Erfindung ist und lediglich das Verständnis der Erfindung erleichtern soll. Eine Gehäusewanne ist hier im Wesentlichen gleichartig zur ersten Ausführungsform ausgebildet. Allerdings ist am Gehäuseboden ein Lagerbock ausgebildet, um eine Schwenkachse 52' aufzunehmen, in welcher ein Spannhebel 50' gelagert ist. Die Luftfilterelemente 70 sitzen wiederum in einem Spannrahmenelement 30', welche sich von dem Spannrahmen 30 der ersten Ausführungsform nur durch die fehlenden Lagerstellen für die Spannhebelelemente unterscheidet. Beim Spannrahmen ist der Spannhebel 50' mit einer Schiebekulisse 51' versehen, wobei es sich um eine glatte Oberfläche der oberen Kante des Spannhebels 50' handelt. Der Krümmungsmittelpunkt der Schiebekulisse ist exzentrisch zur Schwenkachse 52' angeordnet, so dass bei einer Schwenkbewegung des zunächst aufrecht stehenden Spannhebels 50' die Schiebekulisse zunehmend gegen den Spannrahmen 30' drückt und über diesen die Filterelemente 70 mit ihren Dichtungskragen an die Dichtflansche im Gehäuse anpresst.

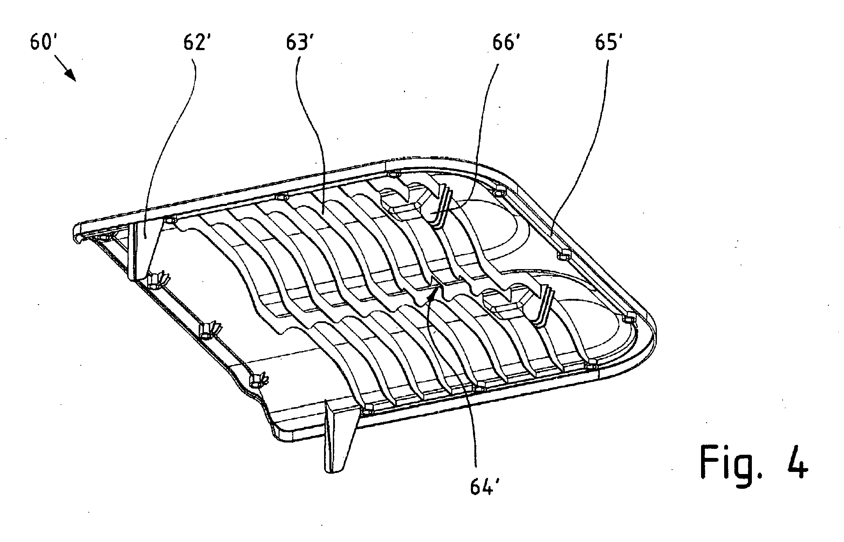

Fig. 4 zeigt den passenden Deckel 60' zur zweiten Ausführungsform eines Filtergehäuses 100'. Der Deckel 60' weist an seiner Unterseite Verstärkungsrippen 63' auf, die in ihrer Kontur der Außenkontur der Luftfilterelemente 70 angepasst sind und so die Filterelemente unterstützen, so dass sie bei Vibrationen nicht anfangen, im Gehäuse um ihre Einspannstelle zu schwingen. Ein Flansch 65' ist kompatibel mit dem Flansch 15' der Gehäusewanne 10' ausgebildet. Ausnehmungen 64' in einigen der Rippen 63' dienen der Aufnahme des verdickten Handgriffsbereichs des Spannhebels 50', so dass bei aufgesetztem Deckel 60' ein Hochschnellen des Spannhebels 50' unterbunden wird.

Stützelemente 66' greifen von oben und auch seitlich auf den Kantenbereich des freien Endes des jeweiligen Luftfilterelements 70 und bewirken dort eine leichte Klemmung.

Weiterhin sind Kontrollschwerter 62' vorgesehen, die seitlich in den Spalt zwischen Gehäusewanne und Filterelementen geschoben werden können, sofern der Spannrahmen in der vorgesehenen Betriebsposition festgelegt ist. Liegt der Spannrahmen 30' noch zu weit zurück, weil keine Vorspannung aufgegeben worden ist, läuft das Sicherheitselement 62' mit seiner quer stehenden Rippe von oben auf den Spannrahmen 30' und verhindert so das korrekte Aufsetzen des Deckels an den Flanschen 65', 15', bis der Benutzer die Vorspannung herstellt und damit den Spannrahmen in die Betriebsposition bringt.

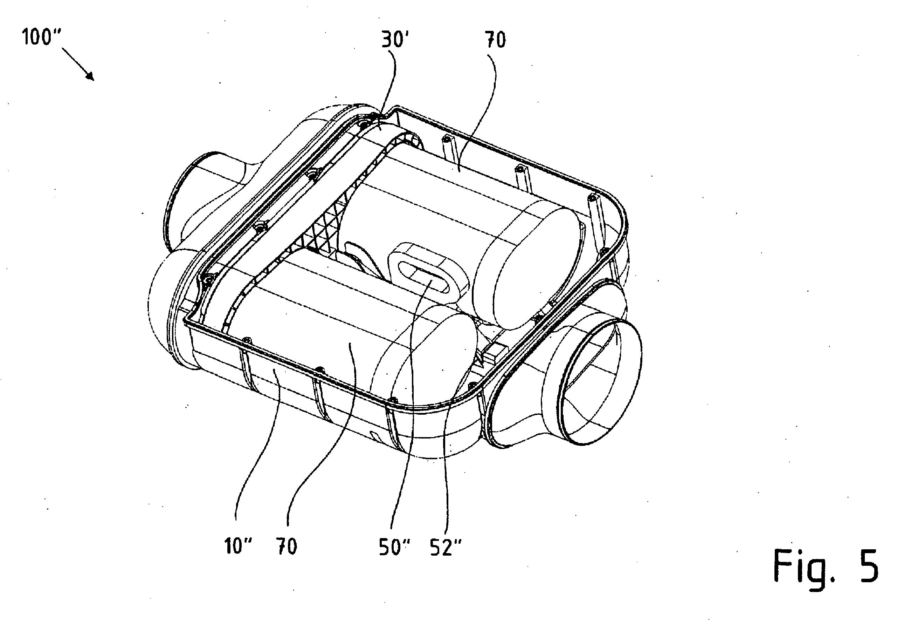

Fig. 5 zeigt eine dritte Ausführungsform eines Filtergehäuses 100", das nicht Teil der beanspruchten Erfindung ist und lediglich das Verständnis der Erfindung erleichtern soll. Wiederum ist eine Gehäusewanne 10" mit Trichterbereichen 11, 13 gegeben, die in Anschlussstutzen 12, 14 münden. Zwei Luftfilterelemente 70 sind nebeneinander eingesetzt und über ein gemeinsames Spannrahmenelement 30' verbunden.

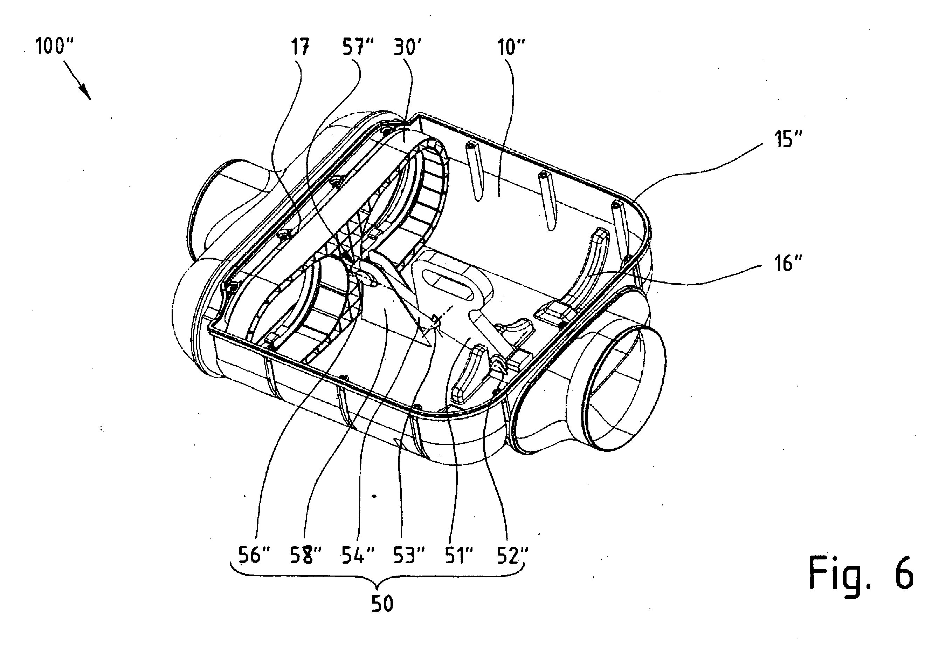

Auch bei dieser Ausführungsform wird die Vorspannung an einem zentralen Angriffspunkt an dem brillenförmig ausgebildeten Spannrahmen 30' bewirkt. Als Spannvorrichtung ist hier eine Kniehebeleinheit 50" vorgesehen, deren Aufbau und Funktion nicht Teil der beanspruchten Erfindung ist und lediglich zum besseren Verständnis der Erfindung insbesondere unter Bezug auf Fig. 6 näher erläutert wird.

Zur Rohluftseite 12 hin ist ein Kniehebelfestlager 52" am Gehäuseboden angeformt, in welchem ein erster Kniehebel 51" schwenkbar gelagert ist. Der erste Kniehebel 51" ist an einem Kniegelenk 53" mit einem zweiten Kniehebel 54" verbunden. Der zweite Kniehebel 54" besitzt einen quer zu seiner Längserstreckung angeordneten Schiebeführungsbolzen 56" und trifft mit seinem abgerundeten freien Ende 57" auf einen zentralen Bereich des Spannrahmenelements 30'. In der Nähe des freien Endes 57" ist der Schiebeführungsbolzen 56" in einer Schiebeführung auf einem Loslagerelement 58" längs geführt. Aufgrund der Führung und der Anordnung des Schiebeführungsbolzens 56" nahe am freien Ende 57", vollzieht das Ende 57" im Wesentlichen eine axiale Bewegung auf das Spannrahmenelement 30' zu. Dabei wandert es in vertikaler Richtung nur wenig aus.

In horizontaler Richtung wandert es quer zur Schiebeführung nicht aus, da der zweite Kniehebel 54" zwischen zwei Lagerböcken 58", welche die Schiebeführung ausbilden, geführt ist. Wird nun durch einen am ersten Kniehebel 51" angeformten Handgriff eine Kraft auf das Kniegelenk 53" ausgeübt, werden die Kniehebel 51", 54" in eine gestreckte Lage überführt, wodurch der zweite Kniehebel mit seinem freien Ende 57" das Spannrahmenelement 30' in Richtung der Dichtflansche am Querschott im Gehäuse schiebt. Durch die erhöhte Anordnung des Schiebeführungsbolzens 56" am Loslager 58" und die Anordnung des Kniehebelfestlagers 52" direkt am Gehäuseboden ist es möglich, das Kniegelenk 53" unter die gedachte Linie zwischen den Lagerpunkten 52", 56" zu drücken, wodurch der in der gestreckten Lage gegebene Totpunkt überwunden wird und die Kniehebeleinheit 50" in eine selbst hemmende Position gebracht wird, so dass auch bei größeren Stößen auf das erfindungsgemäße Filtergehäuse 100" kein Hochschnellen der Kniehebel 51 ", 54" zu befürchten ist.

Zusätzlich kann über Formschlusselemente an der Deckelunterseite auch eine formschlüssige Festlegung des am ersten Kniehebel 51" vorhandenen Handgriffs gewirkt werden.

## Patentansprüche

1. Luftfiltereinheit mit einem Filtergehäuse (100; 100'; 100") für wenigstens zwei axial durchströmbare Filterelemente (70), die zwischen ihren Stirnflächen axial durchströmbar sind und am Außenumfang wenigstens einen endlosen Dichtkragen aufweisen, welcher jeweils gegen einen Dichtflansch (17) am Gehäuse anpressbar ist, wobei die Filterelemente (70) nebeneinander in Ausnehmungen (19) innerhalb eines gemeinsamen Spannrahmenelements (30) einsetzbar sind, wobei jeweils der Dichtkragen auf dem Spannrahmenelement (30) aufliegt, und wobei das Spannrahmenelement planparallel zu dem wenigstens einen Dichtflansch (17) ausgerichtet ist und über eine Spannvorrichtung (50, 50', 50") in Richtung des Dichtflansches (17) verschiebbar ist, wobei der Spannrahmen die Filterelemente (70) mit ihrem Dichtkragen an die Dichtflansche (17) anpresst, **dadurch gekennzeichnet, dass** die Spannvorrichtung durch eine Mehrzahl von einzeln betätigbaren Spannverschlußelementen (50) gebildet ist.

2. Luftfiltereinheit mit einem Filtergehäuse (100; 100'; 100") nach Anspruch 1, **dadurch gekennzeichnet, dass** das Filtergehäuse eine Gehäusewanne (10; 10', 10") umfasst, die sich an zwei gegenüberliegenden Enden jeweils in einem Trichterbereich (11, 13) zu einer Strömungsöffnung (12, 14) hin verjüngt und die in einem zwischen den Trichterbereichen (11, 13) liegenden Zentralbereich zur Entnahme des Filterelements (70) einseitig offen und durch einen Deckel (60; 60') verschließbar ist.

3. Luftfiltereinheit mit einem Filtergehäuse (100; 100'; 100") nach Anspruch 1 oder 2, **dadurch gekennzeichnet, dass** das Spannrahmenelement (30) plattenförmig ausgebildet ist.

4. Luftfiltereinheit mit einem Filtergehäuse (100; 100'; 100") nach Anspruch 3, **dadurch gekennzeichnet, dass** zwei Filterelemente (70) mit ovalem Querschnitt in ein brillenförmiges Spannrahmenelement (30, 30') einsetzbar sind.

5. Luftfiltereinheit mit einem Filtergehäuse (100') nach einem der Ansprüche 2 bis 4, **dadurch gekennzeichnet, dass** sich von der Unterseite des auf der Gehäusewanne aufliegenden Deckels (60') wenigstens ein Sicherheitselement (62') bis an die Rückseite des samt der Filterelemente (70) an den Dichtflansch (17) angepressten Spannrahmens (30') erstreckt.

6. Luftfiltereinheit mit einem Filtergehäuse (100; 100'; 100") nach einem der vorhergehenden Ansprüche, **dadurch gekennzeichnet, dass** im Gehäuse ein Querschott (22) angeordnet ist, das für jedes Filterelement (70) eine Ausnehmung (19) aufweist, um die herum ein Dichtflansch (17) ausgebildet ist.

7. Luftfiltereinheit mit einem Filtergehäuse (100; 100'; 100") nach Anspruch 6, **dadurch gekennzeichnet, dass** für jedes der Filterelemente ein gesonderter Dichtflansch (17) ausgebildet ist.

8. Luftfiltereinheit mit einem Filtergehäuse (100; 100'; 100") nach Anspruch 6, **dadurch gekennzeichnet, dass** für alle Filterelemente ein gemeinsamer Dichtflansch (17) ausgebildet ist.

9. Luftfiltereinheit mit einem Filtergehäuse (100; 100'; 100") nach einem der vorhergehenden Ansprüche, **gekennzeichnet durch** einen Wasserablauf (23) im Gehäuseboden.

10. Luftfiltereinheit mit einem Filtergehäuse (100; 100'; 100") nach einem der Ansprüche 2 bis 9, **dadurch gekennzeichnet, dass** in der Gehäusewanne und/oder im Gehäusedeckel Stützelemente (19, 63) ausgebildet sind, die sich jeweils bis an die Außenseite eines Filterelements (70) erstrecken.

## Claims

1. Air filter unit with a filter housing (100; 100'; 100") for at least two axially through-flowable filter elements (70) which are axially through-flowable between their end faces and feature at their external circumference at least one endless sealing collar which can be pressed against a sealing flange (17) at the housing, the filter elements (70) being insertable side by side in recesses (19) within a common tensioning frame element (30), the sealing collar being supported by the tensioning frame element (30), and the tensioning frame element being aligned plane-parallel to the at least one sealing flange (17) and slidable via a tensioning device (50, 50', 50") towards the sealing flange (17), the tensioning frame pressing the filter elements (70) against the sealing flanges (17) with their sealing collar, **characterized in that** the tensioning device is formed by a plurality of tension lock elements (50) which can be activated individually.

2. Air filter unit with a filter housing (100; 100'; 100") according to claim 1, **characterized in that** the filter housing comprises a housing trough (10, 10', 10") which diminishes at two opposite ends in a conical area (11, 13) towards a flow opening (12, 14) and which is open at one side in a central area located between the conical areas (11, 13) for removing the filter element (70) and closable by a cover (60; 60').

3. Air filter unit with a filter housing (100; 100'; 100") according to claim 1 or 2, **characterized in that** the tensioning frame element (30) has a plate-shaped design.

4. Air filter unit with a filter housing (100; 100'; 100") according to claim 3, **characterized in that** two filter elements (70) with oval cross section can be inserted into a spectacle-shaped tensioning frame element (30).

5. Air filter unit with a filter housing (100') according to one of the claims 2 to 4, **characterized in that** from the bottom side of the cover (60') placed on the housing trough at least one safety element (62') extends up to the reverse side of the tensioning frame (30') pressed onto the sealing flange (17) including the filter elements (70).

6. Air filter unit with a filter housing (100; 100'; 100") according to one of the above-mentioned claims, **characterized in that** a transversal girder (22) which features a recess (19) for each filter element (70) around which a sealing flange (17) is formed is disposed in the housing.

7. Air filter unit with a filter housing (100; 100'; 100") according to claim 6, **characterized in that** for each filter element a separate sealing flange (17) is formed.

8. Air filter unit with a filter housing (100; 100'; 100") according to claim 6, **characterized in that** a common sealing flange (17) is formed for all filter elements.

9. Air filter unit with a filter housing (100; 100'; 100") according to one of the above-mentioned claims, **characterized by** a water drain (23) in the housing bottom.

10. Air filter unit with a filter housing (100; 100'; 100") according to one of the claims 2 to 9, **characterized in that** supporting elements (19, 63) which extend each up to the exterior side of a filter element (70) are formed in the housing trough and/or in the housing cover.

## Revendications

1. Unité de filtrage d'air avec un boîtier de filtre (100 ; 100' ; 100") pour au moins deux éléments filtrants (70) traversés axialement qui peuvent être traversés en sens axial entre leurs surfaces frontales et qui présentent sur leur pourtour extérieur au moins un collet d'étanchéité sans fin lequel peut être pressé respectivement contre une bride d'étanchéité (17) sur le boîtier, les éléments filtrants (70) pouvant être insérés les uns à côté des autres dans des creux (19) au sein d'un élément commun à cadre de serrage (30), le collet d'étanchéité reposant respectivement sur l'élément à cadre de serrage (30) et l'élément à cadre de serrage étant disposé sur un plan parallèle à au moins une des brides d'étanchéité (17) et pouvant être décalé par l'intermédiaire d'un dispositif de serrage (50 ; 50' ; 50") en direction de la bride d'étanchéité (17), le cadre de serrage pressant le collet d'étanchéité des éléments filtrants (70) contre la bride d'étanchéité (17), **caractérisée en ce que** le dispositif de serrage est formé par plusieurs éléments de fermeture à genouillère (50) pouvant être actionnés de manière individuelle.

2. Unité de filtrage d'air avec un boîtier de filtre (100 ; 100' ; 100") selon la revendication 1, **caractérisée en ce que** le boîtier de filtre comprend un bac de boîtier (10 ; 10' ; 10") qui rétrécit, aux deux extrémités opposées, en respectivement une zone conique (11, 13) orientée vers un orifice d'écoulement (12, 14) et qui, dans une zone centrale située entre les zones coniques (11, 13), est ouvert d'un côté en vue du retrait de l'élément filtrant et peut être fermé par un couvercle (60 ; 60').

3. Unité de filtrage d'air avec un boîtier de filtre (100 ; 100' ; 100") selon la revendication 1 ou 2, **caractérisée en ce que** l'élément à cadre de serrage (30) est exécuté en forme de plaque.

4. Unité de filtrage d'air avec un boîtier de filtre (100 ; 100' ; 100") selon la revendication 3, **caractérisée en ce que** deux éléments de filtrage (70) à section ovale peuvent être insérés dans un élément à cadre de serrage (30, 30') en forme de lunette.

5. Unité de filtrage d'air avec un boîtier de filtre (100') selon l'une des revendications 2 à 4, **caractérisée en ce qu'**au moins un élément de sécurité (62') s'étend de la face inférieure du couvercle (60') reposant sur le bac du boîtier jusqu'à la face arrière du cadre de serrage (30') pressé avec les éléments de filtrage (70) contre la bride d'étanchéité (17).

6. Unité de filtrage d'air avec un boîtier de filtre (100 ; 100' ; 100") selon l'une des revendications précédentes, **caractérisée en ce qu'**une cloison transversale (22) qui présente un creux (19) pour chaque élément filtrant (70) et autour de laquelle est prévue une bride d'étanchéité (17) est disposée dans le boîtier.

7. Unité de filtrage d'air avec un boîtier de filtre (100 ; 100' ; 100") selon la revendication 6, **caractérisée en ce qu'**une bride d'étanchéité (17) individuelle est réalisée pour chacun des éléments filtrants.

8. Unité de filtrage d'air avec un boîtier de filtre (100 ; 100' ; 100") selon la revendication 6, **caractérisée en ce qu'**une bride d'étanchéité (17) commune est réalisée pour tous les éléments filtrants.

9. Unité de filtrage d'air avec un boîtier de filtre (100 ; 100' ; 100") selon l'une des revendications précédentes, **caractérisée par** un écoulement d'eau (23) dans le fond du boîtier.

10. Unité de filtrage d'air avec un boîtier de filtre (100 ; 100' ; 100") selon l'une des revendications 2 à 9, **caractérisée en ce que** des éléments d'appui (19, 63) qui s'étendent respectivement jusqu'à la face extérieure d'un élément filtrant (70) sont prévus dans le bac du boîtier et/ou dans le couvercle du boîtier.
